# EUROPEAN PATENT APPLICATION

(11) **EP 1 738 964 A1**
(43) Date of publication of application: **03.01.2007**
(21) Application number: 05709796.6
(22) Date of filing: 07.02.2005
(51) Int. Cl.: B60R 16/02

(54) **INFORMATION PROVIDING DEVICE FOR VEHICLE**

(30) Priority: 26.02.2004 JP 2004050879
(71) Applicant: NIPPON SEIKI CO., LTD., Nagaoka-shi, Niigata 940-8580 (JP)
(72) Inventor: TAMURA, Shigeaki Nippon Seiki Co. Ltd., Niigata 940 (JP)
(74) Representative: Jackson, Richard Eric
(86) International application number: PCT/JP2005/001744
(87) International publication number: WO 2005/082672

(57) **Abstract**

An information providing apparatus for a vehicle includes a control unit 202 that inputs information of the vehicle through at least one of a vehicle information terminal 212 and a multiplex communication input/output unit 213, creates, from at least warning content of the information, warning aural information including at least a combination of a sound effect and a voice, causes an aural information providing unit 240 to operate based on the warning aural information, and changes the warning aural information for each scene in which a user of the vehicle is placed.

## Description

### [Technical Field]

The present invention relates to an information providing apparatus for a vehicle, and particularly to an information providing apparatus for a vehicle which includes an aural information providing unit and can give various warnings to the user of the vehicle by presenting aural information from the aural information providing unit.

### [Background Art]

As an information providing apparatus for a vehicle, for example, there is one disclosed in patent document 1. This information providing apparatus for the vehicle uses a voice synthesizer to create messages corresponding to various states, causes a speaker to audibly output the message, and repeatedly gives the voice warning output until a switch to stop the voice output is operated.
[Patent document 1] JP-UM-B-2-33650

### [Disclosure of the Invention]

### [Problems that the Invention is to Solve]

In the information providing apparatus for the vehicle disclosed in patent document 1, the voice output is repeatedly given to prevent the user from failing to hear it, and the switch to stop the voice output is operated to prevent the user from feeling the voice output to be noisy. However, in the information providing apparatus for the vehicle, since the switch operation by the user is required in order to stop the voice output, there has been room for improvement in usability and salability.

Taking the foregoing problems into consideration, the invention has an object to provide an information providing apparatus for a vehicle in which the foregoing aural information providing unit, whose mounting rate is increased from now, is used to give an optimum warning, so that the user is not required to operate a switch, does not fail to hear the warning information, and is not given an unpleasant feeling, such as a feeling that the warning information is noisy, and further has an object to provide an information providing apparatus for a vehicle which can realize information provision friendly to the user, not the provision of conventional uniform aural information.

### [Means for Solving the Problems]

In order to solve the problems, as recited in claim 1, the invention is an information providing apparatus for a vehicle including an aural information providing unit to aurally notify various states of a vehicle, and a control unit that inputs information of the vehicle through at least one of a vehicle information terminal and a multiplex communication input/output unit, creates at least warning content in the information as warning aural information including at least a combination of a sound effect and a voice, causes the aural information providing unit to operate based on the warning aural information, and changes the warning aural information for each scene in which a user of the vehicle is placed.

Besides, according to the information providing apparatus for the vehicle as recited in claim 2, in the information providing apparatus for the vehicle as recited in claim 1, the control unit identifies the scene based on the input of the information and from any one state of an engine state of the vehicle, a state of the vehicle at a time of start of traveling, a state of the vehicle during traveling, a state of lighting of a light of the vehicle, and a state of a getting-off operation of the user.

Besides, according to the information providing apparatus for the vehicle as recited in claim 3, in the information providing apparatus for the vehicle as recited in claim 1, the control unit identifies the scene based on the input of the information and from a combination of at least two states of an engine state of the vehicle, a state of the vehicle at a time of start of traveling, a state of the vehicle during traveling, a state of lighting of a light of the vehicle, and a state of a getting-off operation of the user.

Besides, according to the information providing apparatus for the vehicle as recited in claim 4, in the information providing apparatus for the vehicle as recited in claim 1, the control unit changes at least one of the number of times of reproduction of the voice, reproduction sequence of the sound effect and the voice, and a tone color of the sound effect, and creates the warning aural information.

Besides; according to the information providing apparatus for the vehicle as recited in claim 5, in the information providing apparatus for the vehicle as recited in claim 1, the control unit has a customize mode to register various settings of the aural information providing unit, and includes an input unit to determine contents of the various settings in the customize mode, and a storage unit to register the contents of the various settings.

### [Effects of the Invention]

According to the invention, in the information providing apparatus for the vehicle including the aural information providing unit to aurally notify the various states of the vehicle, since the optimum warning aural information including at least the combination of the sound effect and the voice is given for each scene, it becomes further easily understandable friendly information for the user, and the HMI (Human Machine Interface) can be improved. Further, since the various setting contents can be customized for each user, the various settings corresponding to the user's preference become possible, and the convenience can be improved.

### [Brief Description of the Drawings]

Fig. 1 is a schematic view showing an information providing apparatus for a vehicle according to an embodiment of the invention.
Fig. 2 is a block diagram showing the information providing apparatus for the vehicle according to the embodiment.
Fig. 3 is a view for explaining the respective warning aural informations according to a first and a second scenes in the embodiment.
Fig. 4 is a view for explaining the respective warning aural information according to a third and a fourth scenes in the embodiment.
Fig. 5 is a view for explaining the respective warning aural information according to a fifth and a sixth scenes in the embodiment.
Fig. 6 is a view for explaining the respective warning aural information according to a seventh and an eighth scenes in the embodiment.
Fig. 7 is a view for explaining a customize function in a control unit of the embodiment.

### [Best Mode for Carrying Out the Invention]

Hereinafter, embodiments of the invention will be described with reference to the accompanying drawings.

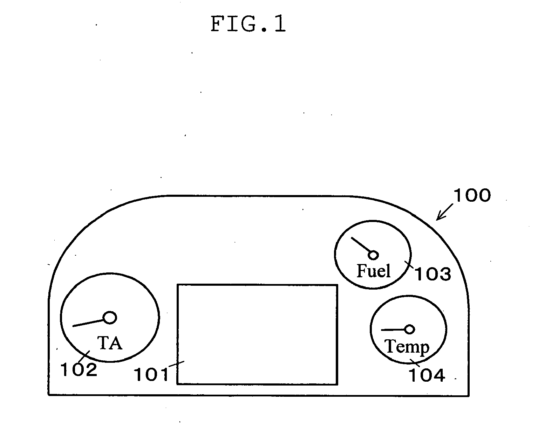

Fig. 1 is a schematic view of an example of an information providing apparatus for a vehicle. An information providing apparatus 100 for a vehicle mainly includes a display part 101 (using, for example, a liquid crystal display device (LCD) of TFT or the like) as a visual information providing unit to perform various information displays, a tachometer 102, a fuel meter 103 and a thermometer 104.

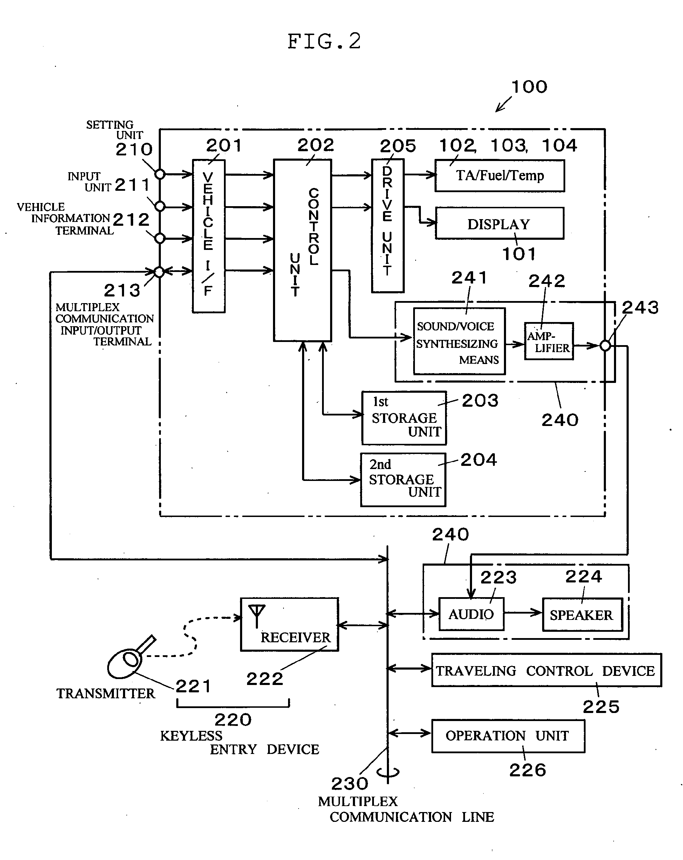

Fig. 2 is a block diagram of the information providing apparatus 100 for the vehicle of Fig. 1. The structure thereof includes a customize mode setting unit (terminal) 210 to shift the information providing apparatus 100 for the vehicle into a customize mode, an input unit 211 to set various setting contents in the execution of the customize mode, a vehicle information terminal 212 and a multiplex communication input/output terminal (multiplex communication input/output unit) 213 that perform input/output of vehicle information, a vehicle interface (I/F) unit 201, a control unit 202 to perform the control of the information providing apparatus 100 for the vehicle, a first storage unit 203 including a ROM in which a processing program of the control unit 202 is stored and the like, a second storage unit 204 including a nonvolatile memory, such as an EEPROM, to enable various settings set by the input unit 211 to be registered for each user, a display part 101 to visually display various information, a drive unit 205 functioning as both a display control of the display part 101 and a drive control of various analog (dial) meters 102, 103 and 104, and an aural information providing unit 240 to aurally notify various informations. The aural information providing unit 240 in this embodiment includes a sound/voice synthesizing unit (with a mixing function) 241 to reproduce sound/voice, an amplifier 242, an output terminal 243, an audio 223 and a speaker 224.

In the information providing apparatus 100 for the vehicle, a keyless entry device 220 (a transmitter 221 and a receiver 222) as a user identification unit, the audio 223, a traveling control device 225 to perform an automatic drive control such as auto-cruise traveling or lane-keep traveling, and an operation unit 226 including an operation switch of the traveling control device 225 are connected through a multiplex communication line 230. Incidentally, the control unit 202 can output an instruction signal to perform a volume mute instruction to the audio 223 through the multiplex communication input/output terminal 213 and the multiplex communication line 230.

Next, the operation of the information providing apparatus 100 for the vehicle at the time of input of the warning information will be described. The control unit 202 obtains information relating to the vehicle from the vehicle information terminal 212 and the multiplex communication input/output terminal 213 that perform the input/output of the vehicle information, and judges, based on this information, whether or not there is an occurrence condition of information that warns the user, that is, warning information, and identifies a scene in which the user is placed. When judging that the occurrence condition of the warning aural information exists, the control unit 202 creates the warning aural information (aural signal of a sound effect and a voice) including at least a combination of a sound effect and a voice, operates the aural information providing unit 240 based on the warning aural information corresponding to the identified scene, and displays a display mode relating to the warning aural information by the display part 101. In this embodiment, although the speaker 224 for the audio 223 is used, a speaker used only for the aural information providing unit 240 may be provided.

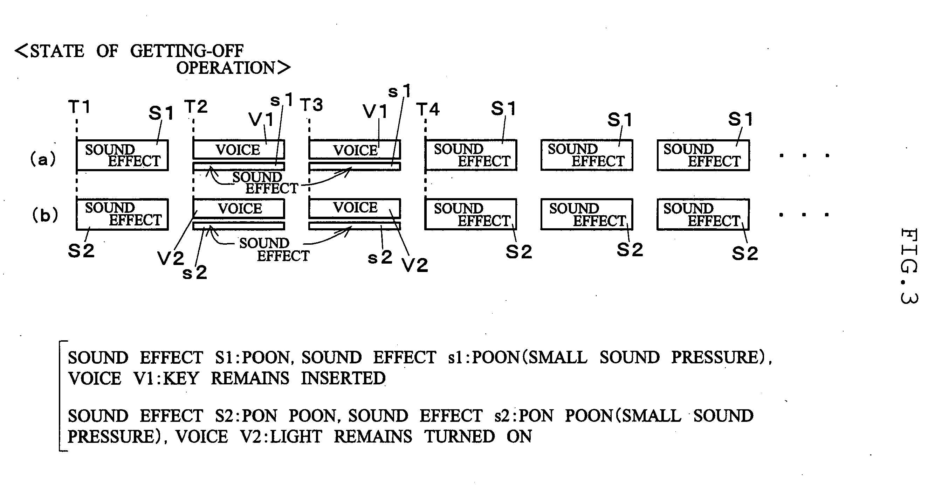

Figs. 3 (a) and 3 (b) show an example showing warning aural information according to a combination of at least two states of an engine state of a vehicle, a state of a getting-off operation of a user, and a state of lighting of a light of the vehicle, and specifically show a specific example for explaining warning aural information (Fig. 3(a)) in a case where a signal (the engine state of the vehicle) indicating that an ignition switch is OFF, a signal (the state of the getting-off operation of the user) indicating that a door in a door open/close switch is open, and a signal (the state of the getting-off operation of the user) indicating that the ignition key is not pulled out are inputted to the control unit 202 from at least one of the vehicle information terminal 212 and the multiplex communication input/output unit 213, and a first scene as a state of forgetting to pull out a key (state in which although the user is in the state of the getting-off operation, pulling out the key is forgotten) is identified by the control unit 202, and warning aural information (Fig. 3 (b)) in a case where a signal indicating that the ignition switch is OFF and a signal (the state of the lighting of the light of the vehicle) indicating that a vehicle light switch is ON are inputted to the control unit 202 from at least one of the vehicle information terminal 212 and the multiplex communication input/output unit 213, and a second scene as a state of user's forgetting to turn off the light is identified by the control unit 202.

Fig. 3(a) shows the warning aural information in the first scene. When the first scene (state of forgetting to pull out the key) is identified at time T1, the control unit 202 controls the aural information providing unit 240 to give a sound effect S1 "poon". Next, at time T2 and time T3, the control unit 202 controls the aural information providing unit 240 to give a voice V1 "Key remains inserted" twice. Incidentally, at time T2 and time T3, the control unit 202 mixes a sound effect s1 ("poon" having a small sound pressure) having a small sound pressure with the voice V1. Next, after time T4, the control unit 202 controls the aural information providing unit 240 to repeatedly give only the sound effect S1 in the first scene, that is, in the period when the state of forgetting to pull out the key continues.

As stated above, when the user is performing the getting-off operation, at the time T1, the attention is called by the sound effect S1 "poon", and thereafter, the voice V1 is given twice so that it is possible to prevent the user from failing to hear, and thereafter, only the sound effect S1 is continuously given so that a noisy state does not occur.

Besides, since the sound effect s1 is mixed when the voice V1 is given, the voice V1 synchronizes with the constant interval of the sound effect s1 and is given, a sense of rhythm occurs in the voice V1, and it becomes further easy to hear for the user who is performing the getting-off operation.

Fig. 3(b) shows the warning aural information in the second scene. When the second scene (state of forgetting to turn off the light) is identified at time T1, the control unit 202 gives the warning by the combination of a sound effect and a voice similarly to the first scene. Differences from Fig. 3 (a) are that the tone color of a sound effect S2 and a sound effect s2 at a time of mixing is changed from "poon" to "pon poon", and a voice V2 is changed as follows: "Light remains turned on". In the second scene, as compared with the first scene, since the tone color of the sound effect is changed, the user can easily recognize the difference between both by the sound effect.

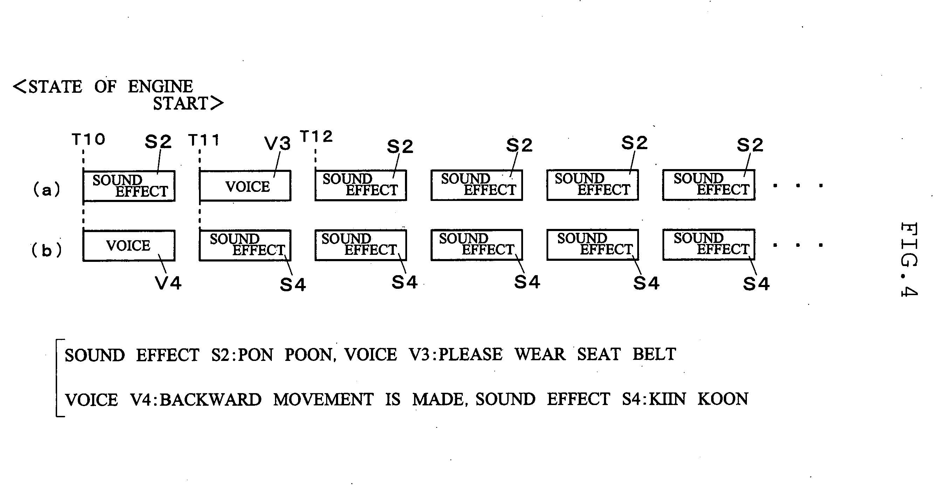

Figs. 4 (a) and 4 (b) show an example showing warning aural information according to a combination of at least two states of an engine state of a vehicle, a state of a getting-off operation of a user, and a state of the vehicle at a time of start of traveling, and specifically show a specific example for explaining warning aural information (Fig. 4 (a)) in a case where a signal (the engine state of the vehicle) indicating that an ignition switch is ON, and a signal (the state of the getting-off operation of the user) that is given when the user does not wear a seat belt and indicates seat belt non-wearing are inputted to the control unit 202 from at least one of the vehicle information terminal 212 and the multiplex communication input/output unit 213, and a third scene as a state of seat belt non-wearing at the time of engine start of the vehicle is identified by the control unit 202, and warning aural information (Fig. 4(b)) in a case where a signal indicating that the ignition switch is ON and a signal (the state of the vehicle, at the time of start of traveling) indicating that an AT shift position was put in the reverse range are inputted to the control unit 202 from at least one of the vehicle information terminal 212 and the multiplex communication input/output unit 213, and a fourth scene as a reverse state of the vehicle is identified by the control unit 202.

Fig. 4(a) shows the warning aural information in the third scene. When the third scene (state of seat belt non-wearing) is identified at time T10, the control unit 202 first controls the aural information providing unit 240 to give a sound effect S2 "pon poon". Next, the control unit 202 controls the aural information providing unit 240 at time T11 to give a voice V3 "Please wear seat belt". Then, after the time T12, the control unit 202 controls the aural information providing unit 240 to repeatedly give only the sound effect S2 in the third scene, that is, in the period when the occurrence condition of the seat belt non-wearing warning continues.

As stated above, when the user starts the engine, the attention is called by the sound effect S3 at the time T10, and thereafter, the voice V3 is given only once without mixing with the sound effect S2. At this time, since the user is generally seated on the driver's seat, even if the voice V3 is given once, the user does not fail to hear, and the user is not urged and feels calm. Thereafter, since only the sound effect S2 is continuously given, a noisy state does not occur.

Fig. 4(b) shows the warning aural information in the fourth scene. When the fourth scene (reverse state of the vehicle) is identified at time T10, the control unit 202 gives the warning by the combination of a sound effect and a voice similarly to the warning aural information in the third scene. When the judgment that the fourth scene occurs is made at T10, the control unit 202 controls the aural information providing unit 240 to give a voice V4 "Backward movement is made". Next, after T10, the control unit 202 controls the aural information providing unit 240 to give a sound effect S4 "kiin koon" in the fourth scene, that is, in the period when the occurrence condition of the reverse warning continues (until the reverse range of the vehicle is released).

As in the foregoing fourth scene, when the operation of the user is accompanied, the aural information providing unit 240 is controlled so that first, a response is made by the voice V4, that is, a response is made by the so-called answer back function, and thereafter, only the sound effect S4 is continuously given, and therefore, the user does not fail to hear the warning content. Besides, since the aural information providing unit 240 is controlled so that only the sound effect S4 is continuously given after the voice V4 is given, there does not occur a noisy state for the user, and an uncomfortable feeling is not given to the user.

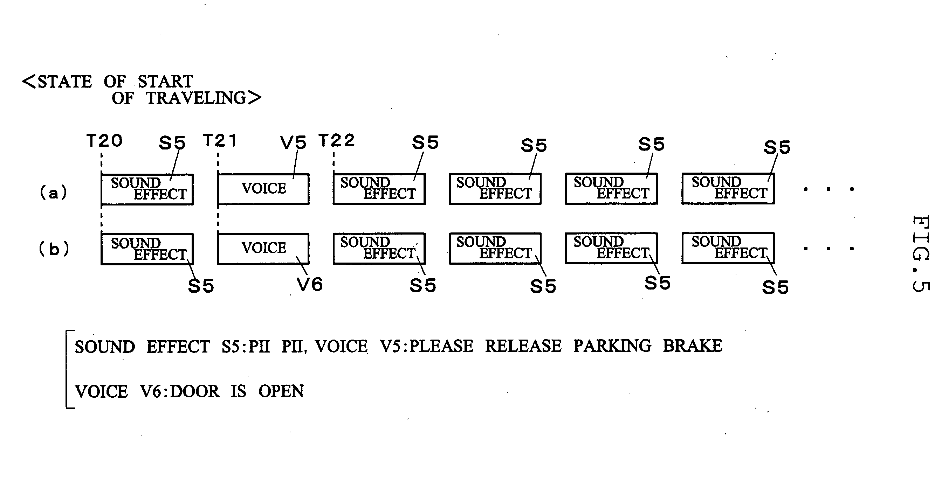

Figs. 5 (a) and 5 (b) show an example showing warning aural information according to a combination of at least two states of an engine state of a vehicle, a state of the vehicle at a time of start of traveling, and a state of a getting-off operation of a user, and specifically show a specific example for explaining warning aural information (Fig. 5 (a)) in a case where a signal indicating that an ignition switch is ON, a signal (the state of the vehicle at the time of start of traveling) indicating that the vehicle reaches a specified speed or higher, and a signal (the state of the vehicle at the time of start of traveling) indicating that the parking brake of the vehicle is on are inputted to the control unit 202 from at least one of the vehicle information terminal 212 and the multiplex communication input/output unit 213, and a fifth scene as a parking brake non-release state is identified by the control unit 202, and warning aural information (Fig. 5 (b)) in a case where a signal indicating that an ignition switch is ON, and a signal of a door open/close switch (the state of the getting-off operation of the user) indicating that a door is open are inputted to the control unit 202 from at least one of the vehicle information terminal 212 and the multiplex communication input/output unit 213, and a sixth scene as a door open state is identified by the control unit 202.

Fig. 5(a) shows the warning aural information in the fifth scene. When the fifth scene (parking brake non-release state) is identified at time T20, the control unit 202 controls the aural information providing unit 240 to give a sound effect S5 "pii pii". Next, the control unit 202 controls the aural information providing unit 240 at time T21 to give a voice V5 "Please release the parking brake". Next, the control unit 202 controls the aural information providing unit 240 to give a sound effect S5 after T21 in the period when the occurrence condition of the fifth scene (parking brake non-release state) continues.

As stated above, when the user starts traveling of the vehicle, the tone color of the sound effect is changed to "pii pii", so that the user is not urged and feels calm. Incidentally, the sound effect S5 "pii pii" uses a frequency band of 1 to 2 KHz capable of dealing with the change of aural characteristics of the user caused by aging or the like.

Fig. 5 (b) shows the door open state in the sixth scene. When the sixth scene (door open state) is identified at time T20, the control unit 202 gives a warning by the combination of a sound effect and a voice similarly to Fig. 5(a). A difference from Fig. 5(a) is that the voice V5 is changed to a voice V6 "Door is open". Incidentally, in Figs. 5(a) and 5(b), although the same sound effect S5 is used, when the frequency is changed by several hundred Hz, the user can recognize the both also from the difference of the sound effect.

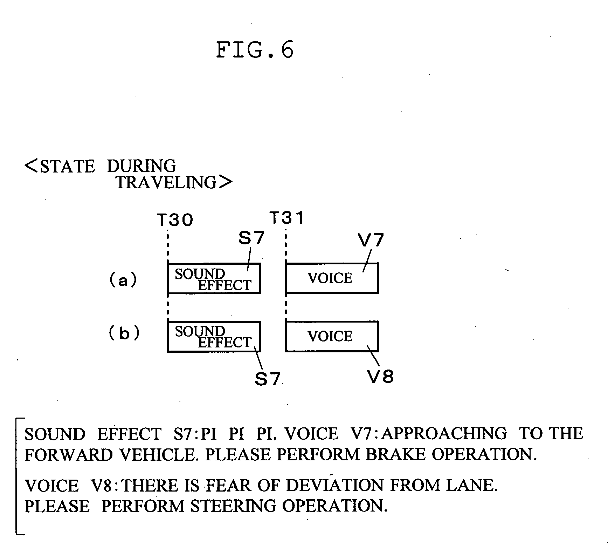

Figs. 6 (a) and 6 (b) show an example showing warning aural information according to a combination of two states of an engine state of a vehicle and a state of the vehicle during traveling, and specifically show a specific example for explaining warning aural information (Fig. 6(a)) in a case where a signal indicating that an ignition switch is ON, a signal (the state of the vehicle during traveling) indicating that the vehicle travels at a specified speed or higher, a signal (the state of the vehicle during traveling) indicating that the vehicle is shifted into the auto-cruse traveling, and a signal (the state of the vehicle during traveling) indicating that the forward vehicle approaches within a specified distance are inputted to the control unit 202 from at least one of the vehicle information terminal 212 and the multiplex communication input/output unit 213, and a seventh scene as an approaching state of auto-cruse traveling is identified by the control unit 202, and warning aural information (Fig. 6 (b)) in a case where a signal indicating that an ignition switch is ON, a signal indicating that the vehicle travels at a specified speed or higher, a signal indicating that the vehicle is shifted into auto-cruse traveling, a signal (the state of the vehicle during traveling) indicating that a lane is detected, and a signal (the state of the vehicle during traveling) indicating that deviation from the lane occurs are inputted to the control unit 202 from at least one of the vehicle information terminal 212 and the multiplex communication input/output unit 213, and an eighth scene as a lane deviation state is identified by the control unit 202. Incidentally, the auto-cruse traveling information, the approaching information of the forward vehicle, the lane deviation information and the like are inputted to the information providing apparatus 100 for the vehicle from the traveling control device 225 connected through the multiplex communication line 230.

Fig. 6(a) shows the warning aural information in the seventh scene. When the seventh scene (approaching state of the auto-cruse traveling) is identified at T30, the control unit 202 first controls the aural information providing unit 240 to give a sound effect S6 "pi pi pi". Next, the control unit 202 controls the aural information providing unit 240 at time T31 to give a voice V7 "Approaching to the forward vehicle. Please perform brake operation".

As stated above, during traveling of the vehicle, the tone color of the sound effect is changed to "pi pi pi", so that a feeling that an urgent avoiding action is needed can be given to the user. Besides, the sound effect and the voice are given only once to prevent the sense of urgency from being given to the user excessively. Incidentally, the sound effect "pi pi pi" uses a frequency band of 1 to 2 KHz capable of dealing with the change of aural characteristics of the user caused by aging or the like.

Fig. 6(b) shows the warning aural information in the eighth scene (lane deviation state). When the eighth scene is identified at time T30, similarly to the seventh scene, the control unit 202 gives a warning by the combination of a sound effect and a voice. A difference from the seventh scene is that the voice is changed to a voice V8 "There is a fear of lane deviation. Please perform steering operation". Incidentally, although the same sound effect S6 is used in the warning aural information in the seventh and the eighth scenes, when the frequency is changed by several hundred Hz, the user can recognize the identification of both the scenes also from the difference of the sound effect.

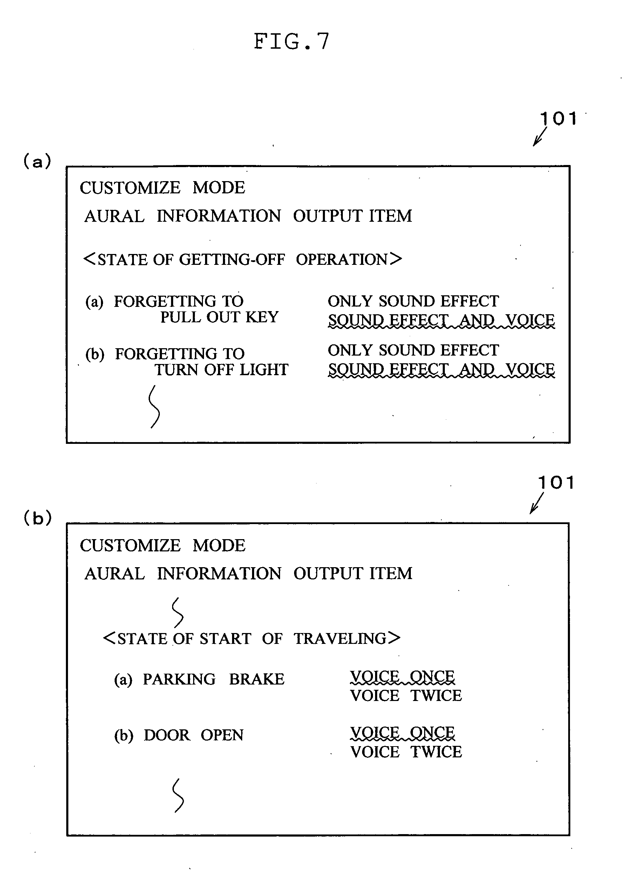

Next, a customize function in the control unit 202 will be described by use of Fig. 7. The user of the vehicle operates the customize mode setting unit 210 from the outside and gives an instruction to make a shift to a customize mode (function) which the control unit 202 previously has. Specifically, this is performed by changing the terminal whose normal potential is at a high level to a low level by a switch or the like. When the shift to the customize mode is made, the control unit 202 changes the display part 101 from a normal display to a customize setting mode initial screen through the drive unit 205. Here, the user registers various setting contents relating to the output contents of warning aural information through the input unit 211. The customize setting can be performed for each user of the vehicle, and the setting contents are stored in the second storage unit 204 for each user. Then the setting contents are automatically read based on the identification information from the keyless entry device 220 as the user identification unit.

Figs. 7 (a) and 7 (b) show specific customize contents of output items of warning aural information from the aural information providing unit 240. Fig. 7 (a) is a screen showing various settings for the respective scenes in which the user of the vehicle is placed, and is specifically the screen on which it is possible to select a combination of a sound effect and a voice or only a sound effect as in the prior art. Underlines in the figure indicate an initial setting state. Similarly, Fig. 7(b) is a screen to enable selection of the number of times that the voice is given for each scene in which the user of the vehicle is placed, and is specifically the screen on which the number of times that the voice is given can be determined from a previously determined number of times, or the number of times that the voice is given can be determined from the number of times arbitrarily determined by the input unit 211, and underlines in the figure indicate an initial setting state. By providing the customize function as stated above, it becomes possible to provide the warning aural information suiting each user's preference.

Incidentally, with respect to the setting contents of the customize, when not only the selection of the voice and the sound effect and the number of times of reproduction of the voice, but also the reproduction sequence of the sound effect and the voice or the tone color of the sound effect is set, it becomes possible to provide the warning aural information more suitable for each user's preference.

The information providing apparatus 100 for the vehicle includes the control unit 202 that inputs various informations of the vehicle through at least one of the vehicle information terminal 212 and the multiplex communication input/output terminal 213, creates at least the warning content in the various informations as the warning aural information including at least the combination of the sound effect and the voice, causes the aural information providing unit 240 to operate based on the warning aural information, and changes the warning aural information for each scene in which the user of the vehicle is placed, and the control unit 202 identifies each scene from a combination of at least two states of the engine state of the vehicle, the state of the vehicle at the time of start of traveling, the state of the vehicle during traveling, the state of lighting of the light of the vehicle, and the state of the getting-off operation of the user, which are inputted from the information, and controls the aural information providing unit 240 to give the warning aural information for each scene.

Accordingly, since the optimum warning aural information including at least the combination of the sound effect and the voice is given for each scene, it becomes possible to give the warning that is more understandable and friendly, for the user and the HMI can be improved. Besides, since it becomes possible to give the warning aural information that is more understandable for the user, the information providing apparatus for the vehicle can be provided in which it is unnecessary to perform a switch operation as in the prior art, and the user does not fail to hear the warning information and is not given such an unpleasant feeling that the warning information is noisy.

Besides, in the information providing apparatus 100 for the vehicle, the processing operation to change the notification pattern of the warning aural information is executed by changing one of the number of times of reproduction of the voice, the reproduction sequence of the sound effect and the voice, and the tone color of the sound effect by the control unit 202, so that it is possible to make it easy for the user to discriminate between the respective warning aural information, and the convenience as the information providing apparatus 100 for the vehicle can be improved. Besides, since uniform aural information provision as in the prior art is not performed, it is possible to realize the provision (information provision) of the warning aural information friendly to the user.

Besides, in the information providing apparatus 100 for the vehicle, the control unit 202 has the customize mode to register various settings of the aural information providing unit 240, and includes the input unit 211 to determine the contents of the various settings in the customize mode, and the second storage unit 204 to register the contents of the various settings, and it becomes possible to provide the warning aural information suitable for each user's preference.

Incidentally, in the foregoing embodiment, although the scene is identified by the control unit 202 from the combination of at least two states of the engine state of the vehicle, the state of the vehicle at the time of start of traveling, the state of the vehicle during traveling, the state of lighting of the light of the vehicle, and the state of the getting-off operation of the user, in the invention as recited in claim 2, the scene may be identified from any one state of the engine state of the vehicle, the state of the vehicle at the time of start of traveling, the state of the vehicle during traveling, the state of lighting of the light of the vehicle, and the state of the getting-off operation of the user. For example, the control unit 202 inputs the signal indicating that the seat belt is worn, and the signal indicating that the door in the door open/close switch is shifted from "close" to "open", and the control unit 202 processes to give the warning aural information of the voice output "Please unlatch the seat belt", so that the scene in which the user is placed can be identified by the combination of the respective signals to indicate only the state of the getting-off operation of the user.

### [Industrial Applicability]

The invention relates to the information providing apparatus for the vehicle using the aural information providing unit, and can be applied to not only a vehicle display apparatus to provide vehicle information, but also a vehicle information providing apparatus, such as an audio apparatus, a navigation apparatus, and a multi-display apparatus, mounted in the vehicle.

## Claims

1. An information providing apparatus for a vehicle, **characterized by** comprising:
an aural information providing unit to aurally notify various states of a vehicle; and
a control unit that inputs information of the vehicle through at least one of a vehicle information terminal and a multiplex communication input/output unit, creates from at least warning content of the information, warning aural information including at least a combination of a sound effect and a voice, causes the aural information providing unit to operate based on the warning aural information, and changes the warning aural information for each scene in which a user of the vehicle is placed.

2. The information providing apparatus for the vehicle as recited in claim 1, **characterized in that** the control unit identifies the scene, based on the input of the information, from any one state of an engine state of the vehicle, a state of the vehicle at a time of start of traveling, a state of the vehicle during traveling, a state of lighting of a light of the vehicle, and a state of a getting-off operation of the user.

3. The information providing apparatus for the vehicle as recited in claim 1, **characterized in that** the control unit identifies the scene, based on the input of the information, from a combination of at least two states of an engine state of the vehicle, a state of the vehicle at a time of start of traveling, a state of the vehicle during traveling, a state of lighting of a light of the vehicle, and a state of a getting-off operation of the user.

4. The information providing apparatus for the vehicle as recited in claim 1, **characterized in that** the control unit changes at least one of the number of times of reproduction of the voice, reproduction sequence of the sound effect and the voice, and a tone color of the sound effect to create the warning aural information.

5. The information providing apparatus for the vehicle as recited in claim 1, **characterized in that** the control unit has a customize mode to register various settings of the aural information providing unit, and includes an input unit to determine contents of the various settings in the customize mode, and a storage unit to register the contents of the various settings.
